# DEMANDE DE BREVET EUROPEEN

(11) **EP 1 431 612 A1**
(43) Date de publication de la demande: **23.06.2004**
(21) Numéro de dépôt: 03356202.6
(22) Date de dépôt: 17.12.2003
(51) Int. Cl.: F16G 5/18

(54) **Chaîne pour transmission continument variable, transmission continument variable et moteur correspondants**

(30) Priorité: 18.12.2002 FR 0216105
(71) Demandeur: Sachs Automotive France SAS, 38870 Saint Simeon de Bressieux (FR)
(72) Inventeur: Schulze, Peter, 38870 Saint Simeon de Bressieux (FR); Reber, Reinhold Friedrich, Richmond Hill, Ontario (CA)
(74) Mandataire: Schouller, Jean-Philippe

(57) **Abrégé**

Cette chaîne comprend plusieurs organes de lien (4, 4'), disposés les uns derrière les autres de façon à former une boucle fermée, chaque organe de lien (4, 4') comportant deux maillons d'extrémité (18, 18') destinés à entrer en contact avec des surfaces tronconiques de ladite transmission continûment variable, ainsi que des maillons intermédiaires (16, 16'), alors qu'il est prévu des axes d'articulation (39, 40), permettant le pivotement mutuel de deux organes de lien adjacents (4, 4'), qui s'étendent à travers des ouvertures (33, 34, 33', 34') ménagées au moins dans ces maillons intermédiaires.

Ces deux axes d'articulation (39, 40) présentent une section de forme globalement triangulaire, ce qui permet de réduire la dimension des ouvertures précitées et, par conséquent, de diminuer la masse et l'inertie de la chaîne.

## Description

La présente invention concerne une chaîne pour transmission continûment variable, ainsi qu'une transmission continûment variable et un moteur équipés d'une telle chaîne.

Une chaîne pour transmission continûment variable forme, de manière classique, une boucle sans fin enroulée autour de deux poulies, dont chacune est supportée par des arbres respectifs d'entrée et de sortie. En service, les côtés de cette chaîne engrènent, par coincement, avec deux surfaces tronconiques en regard, appartenant à chaque poulie.

On conçoit donc qu'une modification de la distance séparant les deux surfaces coniques d'une même poulie entraîne une modification correspondante de la position de la chaîne. Ceci induit par conséquent une variation du rapport de transmission.

De façon plus précise, la chaîne comprend plusieurs éléments de lien, disposés les uns derrière les autres, dont chacun comporte deux maillons latéraux d'extrémité. Par ailleurs, différents maillons intermédiaires sont intercalés entre ces maillons d'extrémité.

Deux éléments de lien adjacents sont mutuellement articulés, par l'intermédiaire d'axes s'étendant transversalement à la direction d'avancée de la chaîne. On a déjà proposé, dans l'art antérieur, plusieurs solutions en vue de la réalisation de ces axes.

Ainsi, US-B-6,346,058 enseigne de mettre en oeuvre l'articulation entre deux éléments de lien, au moyen de deux axes globalement en forme de demi-lunes. De manière plus précise, ces demi-lunes sont disposées dos-à-dos, à savoir que leurs concavités sont dirigées à l'opposée l'une de l'autre.

Cette première solution implique cependant certains inconvénients, liés notamment au fait que le contact avec les surfaces coniques des poulies s'opère par l'intermédiaire des extrémités des axes. Ceci induit l'existence de forces importantes de glissement, s'exerçant de façon quasiment ponctuelle. Il s'ensuit par conséquent une usure prématurée des surfaces coniques de la poulie, ainsi que de la chaîne proprement dite.

On connaît également, de US-A-4,591,353, une chaîne pour transmission continûment variable, dans laquelle il existe un contact surfacique entre les troncs de cône des poulies et les maillons latéraux de la chaîne. A cet effet, ces maillons latéraux sont pourvus de surfaces libres présentant un profil tronconique conjugué de celui des surfaces de coincement, appartenant aux poulies.

L'articulation entre deux éléments de liens adjacents est réalisée, dans le document précédent, au moyen d'axes de section transversale ronde.

On connaît également une chaîne pour transmission continûment variable, de type analogue, dans laquelle cette articulation est mise en oeuvre grâce à la présence de deux axes en forme de demi-lunes. Cette dernière solution est décrite dans le Proceedings de la Conference SAE, en novembre 1989, intitulé « Development of new drive chains for continuously variable transmissions (CVT) ».

L'invention se propose d'améliorer les chaînes pour transmission continûment variables, connues de l'état de la technique, en particulier en apportant une réduction de leur masse globale.

A cet effet, elle a pour objet une chaîne pour transmission continûment variable, comprenant plusieurs organes de lien, disposés les uns derrière les autres de façon à former une boucle fermée, chaque organe de lien comportant deux maillons d'extrémité destinés à entrer en contact avec des surfaces tronconiques de ladite transmission continûment variable, ainsi que des maillons intermédiaires, alors qu'il est prévu des axes d'articulation, permettant le pivotement mutuel de deux organes de lien adjacents, ces axes d'articulation s'étendant à travers des ouvertures de passage ménagées au moins dans les maillons intermédiaires de ces deux organes de lien adjacents, caractérisée en ce que ces deux axes d'articulation présentent une section de forme globalement triangulaire.

Selon d'autres caractéristiques de l'invention :
- la section des axes triangulaires possède des bords extérieurs qui sont identiques et courbes, avec une concavité tournée vers l'intérieur de cet axe ;
- chaque ouverture de passage, ménagée dans un maillon intermédiaire correspondant, comprend des bords d'immobilisation dans lesquels l'un des axes est immobilisé par coopération de formes, l'autre de ces axes étant libre en rotation dans ladite ouverture de passage ;
- les deux axes sont disposés en appui l'un contre l'autre par deux surfaces courbes dont la concavité est tournée vers l'intérieur de ces axes, de façon à définir une ligne de contact mobile en fonction de l'orientation relative des deux maillons intermédiaires adjacents ;
- certains organes de lien sont pourvus de maillons d'extrémité intérieurement décalés, alors que d'autres organes de lien sont pourvus de maillons d'extrémité extérieurement décalés, ces différents maillons intérieurement et extérieurement décalés étant notamment disposés de façon alternée, alors que chaque maillon d'extrémité intérieurement décalé est pourvu d'orifices de passage des axes, qui sont identiques aux orifice de passage ménagés dans les maillons intermédiaires ;
- les maillons d'extrémité extérieurement décalés sont creusés d'ouvertures de blocage d'un axe correspondant, chaque ouverture de blocage présentant des bords identiques et courbes, avec une concavité tournée vers l'intérieur de cette ouverture ;
- chaque bord de l'ouverture de blocage ou de l'axe d'articulation présente globalement une forme d'arc de cercle ou de cardioïde ;
- les bords sont raccordés par des congés courbes dont les centres de courbure respectifs forment les sommets d'un triangle équilatéral ;
- les bords d'immobilisation de l'ouverture de passage reproduisent la géométrie de certains bords de l'ouverture de blocage ;
- il est prévu un axe court, dont deux extrémités sont reçues dans les ouvertures de passage des maillons d'extrémité intérieurement décalés, ainsi qu'un axe long, dont deux extrémités sont reçues dans les orifices de blocage des maillons d'extrémité extérieurement décalés ;
- les maillons d'extrémité sont pourvus de bossages latéraux destinés à prendre appui contre une surface tronconique correspondante de ladite transmission continûment variable, alors que les bossages des maillons d'extrémité intérieurement décalés présentent une épaisseur supérieure à l'épaisseur des bossages des maillons d'extrémité extérieurement décalés.

L'invention a également pour objet une transmission continûment variable, comprenant des première et seconde poulies, dont chacune possède des surfaces tronconiques en regard, ainsi qu'une chaîne engrenant, par coincement, avec ces surfaces tronconiques, caractérisée en ce que cette chaîne est telle que définie ci-dessus.

L'invention a enfin pour objet un moteur, notamment un moteur à combustion interne, pour véhicule automobile, qui est équipé d'une transmission continûment variable telle que définie ci-dessus.

L'invention sera bien comprise à la lecture de la description qui va suivre d'un mode de réalisation d'une chaîne conforme à son principe, donnée uniquement à titre d'exemple et faite en se référant aux dessins annexés, dans lesquels :
- la figure 1 est une vue en perspective, illustrant une transmission continûment variable conforme à l'invention ;
- la figure 2 est une vue en perspective, illustrant de façon plus précise deux éléments de liaison adjacents de la chaîne de la figure 1 ;
- la figure 3 est une vue en perspective éclatée, illustrant les différents composants des éléments de liaison de la figure 2 ;
- la figure 4 est une vue de face, illustrant un maillon d'extrémité appartenant à la chaîne de la figure 1 ;
- la figure 5 est une vue de face d'un maillon intermédiaire, appartenant à la chaîne de la figure 1 ;
- la figure 6 est une vue partielle en perspective d'un axe de la chaîne des figures précédentes ; et
- la figure 7 est une représentation schématique partielle de la chaîne de la figure 1, en cours d'utilisation.

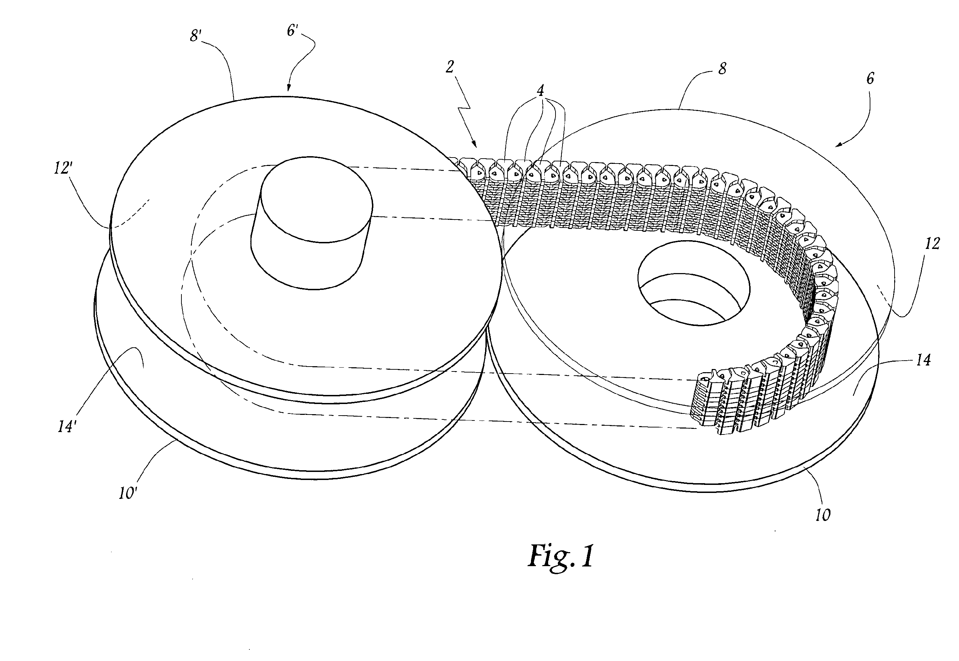

La figure 1 illustre une transmission continûment variable, qui comporte tout d'abord une chaîne 2, formée d'une succession d'organes de lien 4, disposés selon une boucle fermée. Il est par ailleurs prévu deux poulies 6 et 6', solidaires d'arbres respectivement moteur et suiveur, tous deux non représentés.

Chaque poulie 6 ou 6' comprend, de façon classique, deux disques, respectivement 8, 10 et 8', 10', présentant des surfaces intérieures tronconiques, respectivement 12, 14 et 12', 14'.

En service, de façon connue en soi, la chaîne 2 engrène par coincement avec les différents disques des poulies 6 et 6'. On conçoit ainsi que, lorsque l'on modifie la distance séparant deux disques d'une même poulie, ceci provoque une variation de la position relative de la chaîne par rapport à cette poulie et, par conséquent, une modification du rapport de transmission.

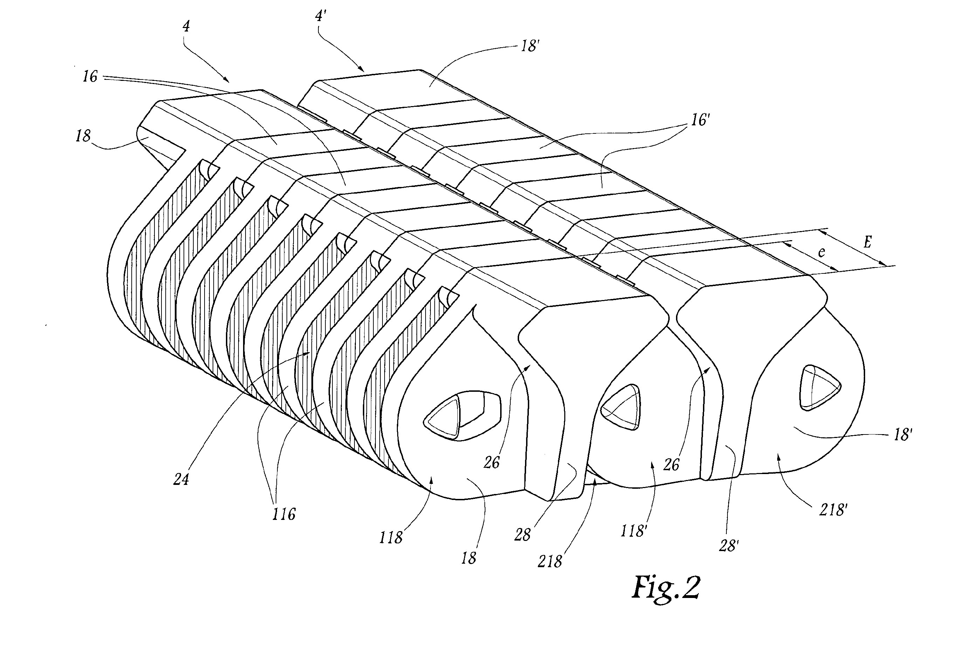

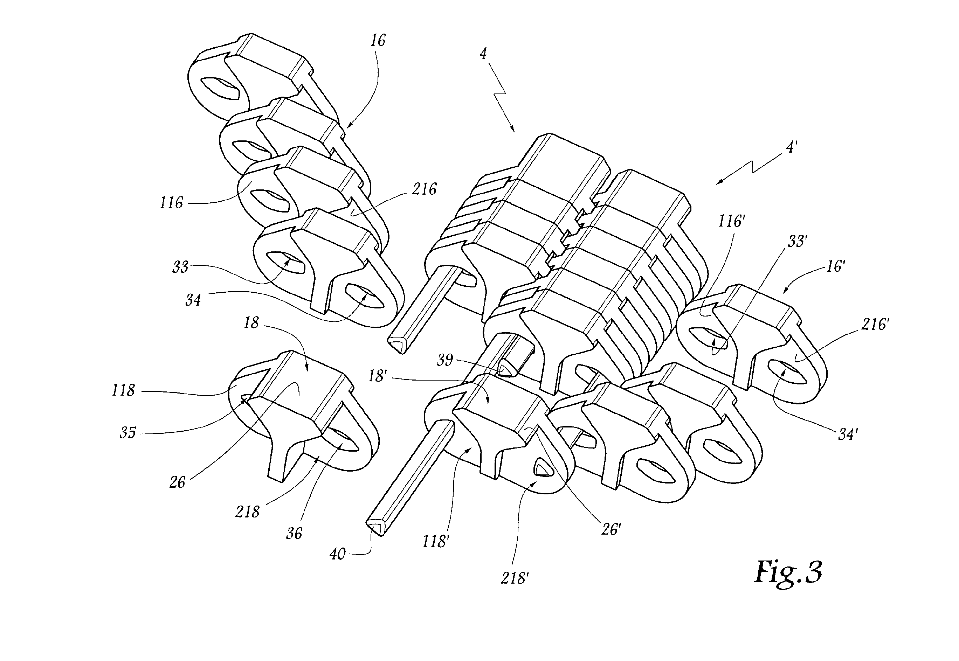

Les figures 2 et 3 illustrent, en vues respectivement montée et éclatée, deux organes de lien adjacents 4 et 4', appartenant à la chaîne 2 représentée sur la figure 1.

Chaque organe de lien 4 ou 4' comprend plusieurs maillons intermédiaires 16 ou 16', qui sont bordés latéralement par deux maillons d'extrémité 18 ou 18'.

Chaque maillon intermédiaire 16 ou 16' est pourvu d'une première saillie axiale 116 ou 116', ainsi que d'une seconde saillie axiale 216 ou 216', s'étendant de façon opposée à la première saillie. De même, chaque maillon d'extrémité 18 ou 18' est pourvu de deux saillies axiales, respectivement 118 ou 118', ainsi que 218 ou 218'.

De la sorte, deux saillies adjacentes, en l'occurrence 116 sur la figure 2, définissent un espace intercalaire 24 destiné à recevoir la saillie d'un maillon appartenant à un autre organe de lien, qui n'est ici pas représenté.

De plus, les maillons d'extrémité 18 ou 18' possèdent, outre les saillies axiales précitées, un bossage latéral 26, 26' s'étendant à l'opposé des maillons intermédiaires.

La surface libre 28, 28' de chaque bossage présente un profil tronconique, conjugué de celui des surfaces 12, 12', 14 et 14' appartenant aux poulies 6 et 6'. De la sorte, en service, ces surfaces 28 et 28' constituent des surfaces de coincement de la chaîne 2 par les différents disques des poulies 6 et 6'.

Il est en outre à noter que les différents maillons des deux organes de lien 4 et 4' s'étendent en quinconce. De la sorte, au sein de l'organe de lien 4, le nombre de maillons intermédiaires 16 est inférieur, d'une valeur de un, à celui des maillons intermédiaires 16' de l'organe de lien 4'.

Ceci implique donc que le maillon d'extrémité 18 se trouve décalé vers l'intérieur par rapport au maillon d'extrémité 18'. Ce maillon 18 possède donc un bossage 26, dont l'épaisseur E est supérieure à celle e du bossage 26', appartenant au maillon d'extrémité 18' (voir notamment figure 2).

L'articulation mutuelle entre les organes de lien 4 et 4' est assurée au moyen de deux axes 39 et 40, pénétrant au travers d'orifices ménagés dans différentes saillies des maillons, comme cela va être explicité dans ce qui suit.

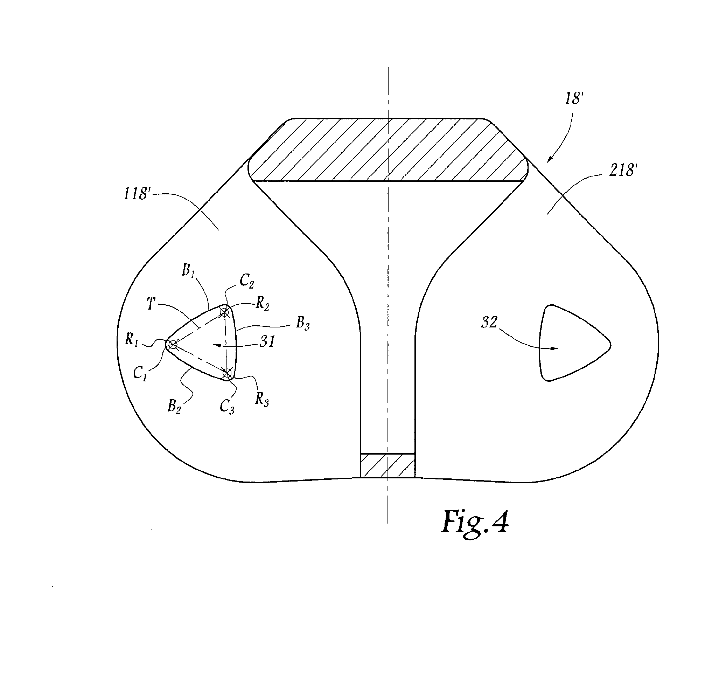

La figure 4 illustre tout d'abord un maillon d'extrémité 18', situé latéralement le plus à l'extérieur de la chaîne. Chaque saillie 118' et 218' de ce maillon 18' est creusée d'une ouverture correspondante 31 et 32.

L'ouverture 31 est ainsi définie par trois bords B₁, B₂, B₃, courbes à concavité tournée vers l'intérieur de cet orifice. Les bords B₁ et B₂ sont reliés par une zone de raccordement R₁, dont on note C₁ le centre de courbure.

De la même manière, les zones de raccordement R₂ et R₃, dont on note C₂ et C₃ les centres de courbure, sont définies respectivement entre les bords B₁ et B₃, ainsi qu'entre les bords B₂ et B₃. Ces bords B₁, B₂, B₃ sont identiques, en ce sens qu'ils présentent la même longueur et le même rayon de courbure.

Il est à noter que ce rayon de courbure est relativement important, de telle sorte que l'ouverture 31 peut être considérée comme globalement triangulaire. A cet égard, les centres de courbure C₁, C₂ et C₃ forment les sommets d'un triangle imaginaire équilatéral T, qui est représenté en traits mixtes sur cette figure 4.

Il est également à remarquer que le profil arrondi des zones de raccordement R₁, R₂ et R₃ permet d'éviter de créer des zones d'amorce de rupture entre les bords B₁, B₂ et B₃.

L'ouverture 32, sensiblement analogue à l'ouverture 31, est disposée de manière à peu près symétrique par rapport à un axe médian du maillon, s'étendant ici verticalement.

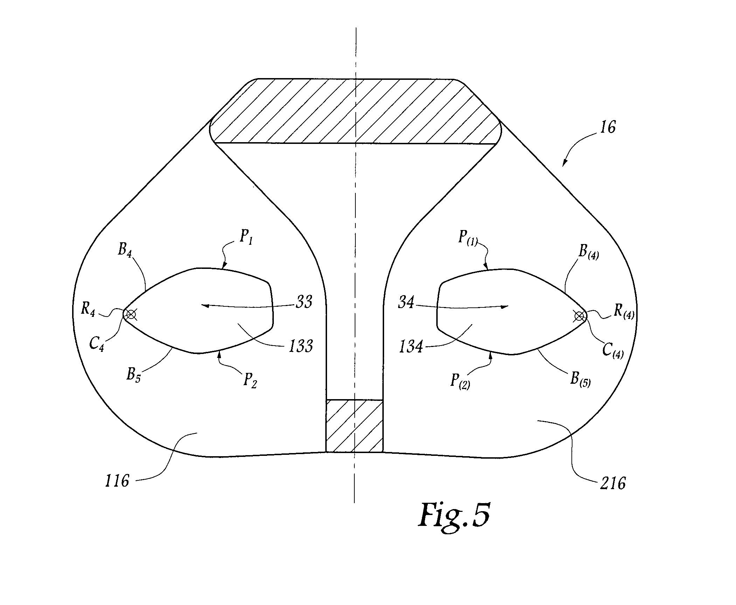

La figure 5 illustre les ouvertures ménagées dans les différentes saillies 116, 116', 216 et 216' des maillons intermédiaires 16 et 16'.

L'ouverture 33 d'un de ces maillons, ici celui affecté de la référence 16, est bordée par deux pourtours P₁ et P₂ reliés, sur la gauche de cette figure 5, par une zone de raccordement R₄, dont on note C₄ le centre de courbure. Dans leurs parties proches de la zone R₄, les pourtours P₁ et P₂ définissent des bords B₄ et B₅ présentant un profil identique à celui des bords B₁ et B₂, périphériques aux ouvertures 31 et 32 de la figure 4. Les bords B₄ et B₅ peuvent ainsi être superposés avec ceux B₁ et B₂.

En revanche, il convient de noter que cette ouverture 33 présente des dimensions sensiblement plus importantes que celles de l'ouverture 31. En effet, cette dernière est tronquée par l'intermédiaire du bord B₃, alors que l'ouverture 33 se prolonge en une partie terminale, notée 133, dans laquelle un des axes peut pivoter, comme on le verra par la suite.

Par ailleurs, l'autre ouverture 34, ménagée dans la saillie 216 du maillon intermédiaire 16, présente une forme analogue à celle de l'ouverture 33, en étant à peu près symétrique par rapport à l'axe vertical médian. Ainsi, les éléments de cette ouverture 34 sont désignés par les mêmes références que ceux de l'ouverture 33, affectées de parenthèses, à savoir P₍₁₎, P₍₂₎, B₍₄₎, B₍₅₎, C₍₄₎ et R₍₄₎.

Cette ouverture 34 peut être superposée, dans sa partie droite sur le dessin, à l'ouverture 32 de la figure 4, tout en se prolongeant en une partie terminale 134, située à gauche du dessin.

Comme l'illustre notamment la figure 3, les maillons 16' de l'autre organe de lien 4' sont creusés d'ouvertures 33' et 34', analogues à celles 33 et 34 ci-dessus. Enfin, les maillons d'extrémité 18, intérieurement décalés, sont creusés d'ouvertures 35 et 36, analogues à celles 33 et 34.

En vue de l'articulation mutuelle des deux organes 4 et 4', il est également prévu deux axes disposés côté à côte, destinés à pénétrer dans les différentes ouvertures des maillons.

De façon plus précise, l'un 39 de ces axes est dit court, dans la mesure où ses deux extrémités sont reçues dans l'une des ouvertures 35 ou 36 du maillon extérieur 18, intérieurement décalé. En revanche, l'autre 40 de ces axes est dit long, dans la mesure où ses extrémités sont reçues dans l'un des orifices 31 ou 32 du maillon d'extrémité 18', extérieurement décalé.

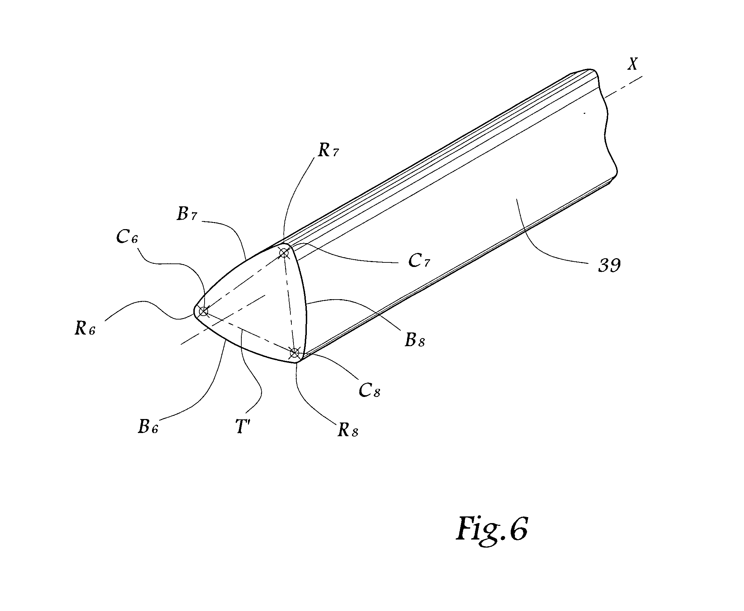

La figure 6 illustre, de façon plus précise, le profil de l'axe court 39.

Cet axe 39 est cylindrique, à base globalement triangulaire, sa section étant invariante sur toute sa longueur. Cette section est identique à celle de l'orifice 31 ou 32, en ce sens que l'axe 39 présente des bords B₆, B₇ et B₈ courbes, de mêmes dimensions que les bords B₁ à B₃.

La concavité de ces bords B₆ à B₈ est tournée vers l'axe géométrique central X, ces bords étant reliés par des zones de raccordement notées respectivement R₆, R₇, R₈, dont les centres de courbure C₆, C₇ et C₈ définissent les sommets d'un triangle équilatéral imaginaire T', de mêmes dimensions que le triangle T de la figure 4.

Il est à noter que les éléments de l'axe long 40, qui présente un profil identique à celui de l'axe court 39, sont désignés par les mêmes références, affectées d'un « prime », à savoir B'₆ à B'₈, R'₆ à R'₈ ainsi que C'₆ à C'₈.

Il découle de ce qui précède que deux des bords B₆ à B₈, ou B'₆ à B'₈, des axes 39 ou 40 peuvent entrer en contact avec les bords, notamment ceux référencés B₄ et B₅, des ouvertures de grandes dimensions 33 à 36. Par ailleurs, dans le cas de l'axe long 40, ce dernier peut être inséré dans l'une des ouvertures 31 ou 32, ses bords B'₆ à B'₈ entrant alors en contact respectivement avec les bords B₁ à B₃·

A cet égard, il n'est pas nécessaire de choisir une orientation particulière des axes 39 ou 40 par rapport aux différents orifices, ce qui facilite le montage de la chaîne.

La forme des différents bords évoqués ci-dessus est choisie pour une optimisation de la transmission des efforts entre les axes 39 et 40. Il a pu être déterminé par le calcul que la forme théorique la plus adaptée est celle d'une cardioide, une telle forme pouvant être raisonnablement approximée par un arc de cercle.

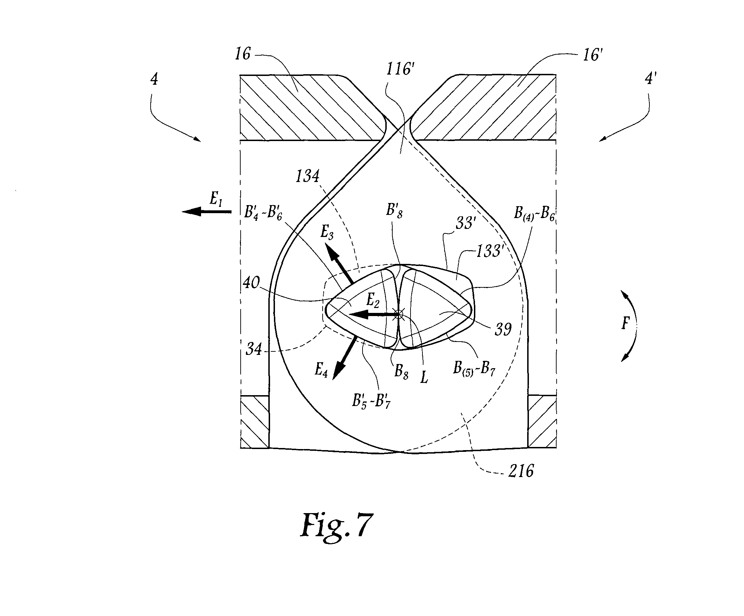

La figure 7 représente une vue partielle, à plus grande échelle, illustrant les deux organes 4 et 4' en condition normale de service de la chaîne 2.

On a représenté partiellement, sur cette figure, la saillie 216 d'un maillon intermédiaire 16 du premier organe 4, ainsi que la saillie 116' d'un maillon intermédiaire 16' de l'autre organe 4'. On retrouve donc l'ouverture 33', ménagée dans la saillie 116', ainsi que l'ouverture 34 ménagée dans la saillie 216.

L'axe court 39 entre en contact, par ses bords B₆ et B₇, avec les bords B₍₄₎ et B₍₅₎ de l'ouverture 34. Par ailleurs, l'axe long 40 entre en contact, par ses bords B'₆ et B'₇, avec les bords B'₄ et B'₅ de l'ouverture 33'.

Enfin, les deux extrémités de l'axe court 39, non représentées sur cette figure, sont reçues dans les ouvertures 36 des deux maillons d'extrémité 18, appartenant à l'organe de lien 4. De façon également non représentée, l'axe long 40 est immobilisé à ses deux extrémités, par coopération de formes, à l'intérieur des orifices 31 du maillon d'extrémité 18', extérieurement décalé.

La transmission d'un effort de traction E₁ exercé sur les maillons 16 et 16' a lieu par appui de l'axe court 39 sur l'axe long 40, au niveau de leurs bords respectifs B₈ et B'₈. Ceci génère un effort E₂ au niveau d'une ligne de contact L entre ces bords en regard.

Du fait de la géométrie de ces axes et des différents orifices, en particulier celui 31, cet effort de traction est réparti au niveau des bords B'₄ et B'₅ de l'orifice 33 en deux efforts élémentaires E₃ et E₄ de moindre intensité.

De plus, lors du pivotement mutuel des deux maillons 16 et 16' (flèche F), chaque axe se trouve coincé dans une des ouvertures, tout en étant libre de pivoter par rapport à l'autre. De façon plus précise, l'axe 39 est solidaire en rotation des parois de l'ouverture 34, mais peut pivoter à l'intérieur de la partie 133' de l'ouverture 33', alors que l'axe 40 est solidaire en rotation des parois de l'ouverture 33', tout en pouvant pivoter à l'intérieur de la partie 134 de l'ouverture 34.

L'invention permet de réaliser les objectifs précédemment mentionnés.

Ainsi, faire appel à deux axes globalement triangulaires, pénétrant dans les ouvertures des différents maillons, permet de réduire la dimension de ces ouvertures, par rapport aux différentes solutions envisagées dans l'art antérieur. Ceci assure, par conséquent, une diminution de la hauteur totale de cette chaîne, ce qui entraîne une réduction correspondante de sa masse.

L'invention garantit de la sorte une diminution de l'inertie globale de la chaîne.

En outre, la chaîne de l'invention présente un faible allongement, et s'avère particulièrement satisfaisante sur le plan acoustique.

Par ailleurs, il est à noter que, de façon surprenante, l'utilisation d'axes triangulaires n'est pas préjudiciable à l'intégrité mécanique de la chaîne pour transmission continûment variable.

Quand bien même ces axes triangulaires présentent des dimensions réduites, ils se révèlent à même de supporter les différents efforts auxquels est soumise cette chaîne de transmission. Il s'agit ainsi d'un premier effort, parallèle à l'avancée de la chaîne, ainsi que d'un effort supplémentaire, perpendiculaire à cette direction d'avancée, qui est dû à l'action de coincement de la chaîne entre les surfaces tronconiques des disques de poulies.

Les efforts évoqués ci-dessus sont de nature et d'orientation distinctes de ceux auxquels est soumise une chaîne de distribution, qui n'est pas destinée à une utilisation en transmission continûment variable. Ils constituent donc une spécificité de ce dernier type de transmission.

Enfin, la chaîne de l'invention s'avère d'une fiabilité satisfaisante, permettant de lui conférer une durée d'utilisation supérieure à 500 000 kms.

## Revendications

1. Chaîne (2) pour transmission continûment variable, comprenant plusieurs organes de lien (4, 4'), disposés les uns derrière les autres de façon à former une boucle fermée, chaque organe de lien (4, 4') comportant deux maillons d'extrémité (18, 18') destinés à entrer en contact avec des surfaces tronconiques (12, 14, 12', 14') de ladite transmission continûment variable, ainsi que des maillons intermédiaires (16, 16'), alors qu'il est prévu des axes d'articulation (39, 40), permettant le pivotement mutuel de deux organes de lien adjacents (4, 4'), ces axes d'articulation s'étendant à travers des ouvertures de passage (33, 34, 33', 34') ménagées au moins dans les maillons intermédiaires de ces deux organes de lien adjacents, **caractérisée en ce que** ces deux axes d'articulation (39, 40) présentent une section de forme globalement triangulaire.

2. Chaîne selon la revendication 1, **caractérisée en ce que** la section des axes triangulaires (39, 40) possède des bords extérieurs (B₆, B₇, B₈, B'₆, B'₇, B'₈) qui sont identiques et courbes, avec une concavité tournée vers l'intérieur (X) de cet axe.

3. Chaîne selon la revendication 1 ou 2, **caractérisée en ce que** chaque ouverture (33, 34, 33', 34') de passage, ménagée dans un maillon intermédiaire correspondant (16, 16'), comprend des bords d'immobilisation (B₄, B₅, B₍₄₎, B₍₅₎, B'₄, B'₅) dans lesquels l'un (39, 40) des axes est immobilisé par coopération de formes, l'autre (40, 39) de ces axes étant libre en rotation dans ladite ouverture de passage.

4. Chaîne selon la revendication 3, **caractérisée en ce que** les deux axes (39, 40) sont disposés en appui l'un contre l'autre par deux surfaces courbes (B₈, B'₈) dont la concavité est tournée vers l'intérieur de ces axes, de façon à définir une ligne de contact (L) mobile en fonction de l'orientation relative des deux maillons intermédiaires adjacents (16, 16').

5. Chaîne selon l'une quelconque des revendications précédentes, **caractérisée en ce que** certains organes de lien (4) sont pourvus de maillons d'extrémité intérieurement décalés (18), alors que d'autres organes de lien (4') sont pourvus de maillons d'extrémité extérieurement décalés (18'), ces différents maillons intérieurement et extérieurement décalés étant notamment disposés de façon alternée, et **en ce que** chaque maillon d'extrémité intérieurement décalé (18) est pourvu d'orifices (35, 36) de passage desdits axes (39, 40), qui sont identiques aux orifice de passage (33, 34, 33', 34') ménagés dans les maillons intermédiaires (16, 16').

6. Chaîne selon la revendication 5, **caractérisée en ce que** les maillons d'extrémité extérieurement décalés (18') sont creusés d'ouvertures (31, 32) de blocage d'un axe correspondant (39, 40), chaque ouverture de blocage (31, 32) présentant des bords (B₁, B₂, B₃) identiques et courbes, avec une concavité tournée vers l'intérieur de cette ouverture.

7. Chaîne selon l'une des revendications 2 à 6, **caractérisée en ce que** chaque bord (B₁, B₂, B₃, B₆, B₇, B₈, B'₆, B'₇, B'₈) de l'ouverture de blocage (31, 32) ou de l'axe d'articulation (39, 40) présente globalement une forme d'arc de cercle ou de cardioide.

8. Chaîne selon la revendication 7, **caractérisée en ce que** lesdits bords (B₁, B₂, B₃, B₆, B₇, B₈, B'₆, B'₇, B'₈) sont raccordés par des congés courbes (R₁, R₂, R₃, R₆, R₇, R₈, R'₆, R'₇, R'₈) dont les centres de courbure respectifs (C₁, C₂, C₃, C₆, C₇, C₈, C'₆, C'₇, C'₈) forment les sommets d'un triangle équilatéral (T, T').

9. Chaîne selon l'une des revendications 3 à 5, prise en combinaison avec l'une des revendications 6 à 8, **caractérisée en ce que** les bords (B₄, B₅, B₍₄₎, B₍₅₎, B'₄, B'₅) d'immobilisation de l'ouverture de passage (33, 34, 33', 34') reproduisent la géométrie de certains bords (B₁, B₂) de l'ouverture de blocage (31, 32).

10. Chaîne selon l'une quelconque des revendications 6 à 9, **caractérisée en ce qu'**il est prévu un axe court (39), dont deux extrémités sont reçues dans les ouvertures de passage (35, 36) des maillons d'extrémité intérieurement décalés (18), ainsi qu'un axe long (40), dont deux extrémités sont reçues dans les orifices de blocage (31, 32) des maillons d'extrémité extérieurement décalés (18').

11. Chaîne selon l'une quelconque des revendications 5 à 10, **caractérisée en ce que** les maillons d'extrémité (18, 18') sont pourvus de bossages latéraux (26, 26') destinés à prendre appui contre une surface tronconique correspondante de ladite transmission continûment variable, et **en ce que** les bossages (26) des maillons d'extrémité intérieurement décalés (18) présentent une épaisseur (E) supérieure à l'épaisseur (e) des bossages (26') des maillons d'extrémité extérieurement décalés (18').

12. Transmission continûment variable, comprenant des première (6) et deuxième (6') poulies, dont chacune possède des surfaces tronconiques en regard (12, 14, 12', 14'), ainsi qu'une chaîne (2) engrenant, par coincement, avec lesdites surfaces tronconiques, **caractérisée en ce que** cette chaîne est conforme à l'une quelconque des revendications précédentes.

13. Moteur, notamment moteur à combustion interne, pour véhicule automobile, équipé d'une transmission continûment variable selon la revendication précédente.
